# EUROPEAN PATENT SPECIFICATION

(11) **EP 3 022 363 B1**
(45) Date of publication and mention of the grant of the patent: **12.02.2020**
(21) Application number: 14741303.3
(22) Date of filing: 18.07.2014
(51) Int. Cl.: E02F 9/08, A01D 41/12, B62D 25/10, B60R 3/00, B66C 13/54, E02D 17/13, E02F 3/32

(54) **CATWALK FOR CONSTRUCTION MACHINE**
ARBEITSBÜHNE FÜR BAUMASCHINE
PASSERELLE POUR ENGIN DE CHANTIER

(30) Priority: 18.07.2013 JP 2013149613
(43) Date of publication of application: 25.05.2016
(73) Proprietor: Caterpillar SARL, 1208 Geneva (CH)
(72) Inventor: SHIMIZU, Kunitomo, Tokyo 158-8530 (JP); AKAHANE, Eiji, Tokyo 158-8530 (JP); AKIZUKI, Tomohiro, Osaka 530-0001 (JP)
(74) Representative: BRP Renaud & Partner mbB Rechtsanwälte Patentanwälte Steuerberater
(86) International application number: PCT/EP2014/065526
(87) International publication number: WO 2015/007893

(56) References cited:
- JP-A- H06 171 429
- JP-A- H10 237 900
- JP-A- 2013 064 232
- JP-A- 2013 064 239
- KR-A- 20110 046 856
- US-A- 5 996 737

## Description

### TECHNICAL FIELD

The present invention relates to a catwalk that is a passage for inspection work provided on a construction machine with an upper slewing body.

### BACKGROUND ART

A large-sized construction machine with an upper slewing body, for example, a hydraulic excavator, has a large vehicle height, and it is therefore difficult for an operator on the ground to perform inspection work and the like on apparatuses arranged on the upper slewing body. Accordingly, a catwalk that is a passage for inspection work is provided on a side surface of the upper slewing body (see, for example, JP 2006-045853 A).

The catwalk is fixed to the side surface of the upper slewing body. Thus, when the upper slewing body is slewed, the operator can consciously avoid collision against an obstacle located above and laterally to the catwalk. However, disadvantageously, a longitudinal end of the catwalk located behind the operator and corresponding to the outermost side of the slewing may come into contact with and be damaged by an obstacle such as a mountain of excavated and accumulated sediment located laterally to the catwalk. Moreover, this deformation prevents a service door on a side surface of the upper slewing body from being opened. This in turn precludes inspection work on apparatuses inside the door.

A technique for solving this problem has been developed. For example, the whole catwalk is attached to the upper slewing body so as to be able to pivot upward from a horizontal orientation so that, upon coming into contact with an obstacle, the whole catwalk is pivoted upward (see, for example, JP 2000-303500 A).

In another example, a portion of a catwalk located in a rear portion of the vehicle can be stored under a portion of the catwalk fixedly installed in a front portion of the vehicle so that, during a slewing operation, the rear portion of the catwalk is stored to prevent contact with an object, whereas, during inspection work, the rear portion of the catwalk is brought back to a non-stored position (see, for example, JP H5-179676 A).

JP 2013-064232 A discloses a scaffold structure for a construction machine. In order to reduce a deflection amount of a scaffold member generated when an operator gets on and off the scaffold member, in a scaffold structure of a construction machine including a plurality of scaffold members disposed so as to be lined in the longitudinal direction of a revolving super structure, a plurality of scaffold members are disposed so as to be lined in the longitudinal direction of a revolving super structure. The scaffold members adjacent to each other are connected so as to be freely engaged by a connection member at an overhang side end of the scaffold members . The connection member includes a spacer member to be fitted to a gap of the scaffold members adjacent to each other, and a fastening bolt and a fastening nut for fastening and fixing the scaffold members with each other in the state of holding the spacer member between the scaffold members.

Attention is also drawn to KR 2011-0046856 A.

These improved catwalks still have problems to be solved as described below.

In the structure in which the whole catwalk is mounted so as to be pivotable upward from the horizontal orientation, a mounting bracket (a component 6 in FIG. 2 of JP 2000-303500 A) is gouged over a large area in order to avoid the trajectory of pivoting movement of a tread plate (a component 3 in FIG. 2 of JP 2000-303500 A) located inside the center of the pivoting movement. Thus, when the operator steps on the tread plate located inside the center of the pivoting movement, the catwalk pivots and becomes unstable. Furthermore, due to the gouging, providing the bracket with rigidity is difficult, and the bracket is easily damaged and deformed. Furthermore, as the difference in height between an outer end (a component 3a in FIG. 2 of JP 2000-303500 A) that comes into contact with an obstacle and the center of pivoting movement increases, reaction force from the obstacle is more likely to act as a force that causes the catwalk to pivot. The range of the gouging and the likelihood of the bracket being damaged and deformed increase consistently with the difference in height. Moreover, in a configuration where the catwalk is fixedly held at an upper pivoting movement position, the whole catwalk needs to be returned to the original position for use. This is cumbersome.

In the configuration where a portion of the catwalk is stored in the fixed portion of the catwalk, when the operator has forgotten the storage, the portion of the catwalk may come into contact with and be damaged by an obstacle. Furthermore, the structure is complicated and involves high manufacturing costs. Moreover, when the stored portion is damaged by sediment or the like, storing or withdrawing the rear portion is difficult.

With these problems in view, it is a technical object of the present invention to provide a catwalk for a construction machine which enables effective prevention of damage resulting from contact between the catwalk during slewing and an obstacle, which allows a stable work passage to be prepared, and which has a simple structure to enable a reduction in manufacturing costs and easy handling.

### DISCLOSURE OF THE INVENTION

According to the present invention, a construction machine which accomplishes the above-described technical object is provided as set forth in claim 1.

A bumper serving as a buffer member is mounted so as to face obliquely downward at an outer end portion of the passage surface away from the side surface of the upper slewing body.

Moreover, the movable portion is preferably mounted on the axis via an elastic bearing.

According to the present invention, the catwalk that is a passage extending and installed along the side surface of the upper slewing body of the construction machine includes the movable portion at the end portion of the catwalk corresponding to the radially outermost side with respect to the slewing center of the upper slewing body, the movable portion being mounted so as to be pivotable between the horizontal and vertical directions about the axis positioned on the side surface side of the upper slewing body.

Thus, the movable portion is provided at the end portion of the catwalk corresponding to the radially outermost side with respect to the slewing center and is mounted so as to be pivotable between the horizontal and vertical directions, the end portion being likely to come into contact with an obstacle during slewing. Consequently, when the end portion comes into contact with the obstacle, the movable portion is flipped up, allowing effective prevention of damage to the catwalk. Furthermore, the movable portion is provided only at the end portion, eliminating the need to gouge a support frame and allowing a stable work passage to be prepared. Additionally, a rigid and simple structure can be inexpensively provided, and the structure is easy to handle.

### BRIEF DESCRIPTION OF THE DRAWINGS

FIG. 1(a) is a side view of a hydraulic excavator that is a typical example of a construction machine with a catwalk for a construction machine configured according o the present invention, FIG. 1(b) is a plan view of the hydraulic excavator as seen in the direction of arrow A in FIG. 1(a), and FIG. 1(c) is a rear view of a catwalk portion as seen in the direction of arrow B in FIG. 1(a).
FIG. 2 is an enlarged detailed view of a movable portion shown by C in FIG. 1.
FIG. 3 is an enlarged view of the movable portion as rotated through 90° with respect to FIG. 2 in the direction of arrow D in FIG. 2.
FIG. 4 is an enlarged cross-sectional view of a bearing portion of the movable portion taken along arrow E-E in FIG. 3.

### BEST MODE FOR CARRYING OUT THE INVENTION

A catwalk for a construction machine configured according to the present invention will be described in further detail with reference to the attached drawings showing a preferred embodiment in a hydraulic excavator that is a typical construction machine with an upper slewing body.

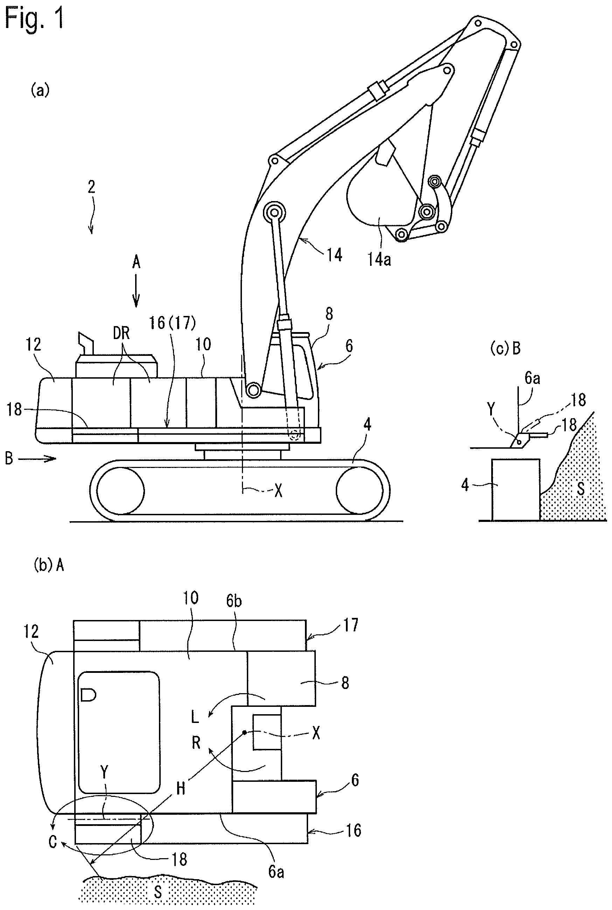

Description will be given with reference to FIG. 1. A hydraulic excavator generally shown by reference numeral 2 includes a lower traveling body 4 and an upper slewing body 6 mounted on the lower traveling body 4 so as to be able to slew about an axis X that is a slewing center extending in the vertical direction. The upper slewing body 6 includes an operator cab 8 provided at a front end (a right end in FIG. 1(a)) of the upper slewing body 6, an engine room 10 provided behind the operator cab 8 and in which apparatuses such as an engine are housed, and a counterweight 12 provided at a rear end of the upper slewing body 6. An articulated working arm apparatus 14 with a bucket 14a is mounted on the front end side of the upper slewing body 6.

An operator operates an operating apparatus in the operator cab 8 to control traveling of the lower traveling body 4, slewing of the upper slewing body 6 (a rightward direction shown by arrow R and a leftward direction shown by arrow L), and actuation of the working arm apparatus 14 to perform operations.

The upper slewing body 6 includes a plurality of openable and closable doors DR provided on a right side surface 6a and a left side surface 6b of the upper slewing body 6 to allow maintenance and inspection to be performed on the apparatuses in the engine room 10 and the like. Catwalks 16 and 17 are installed on the respective side surfaces 6a and 6b of the upper slewing body 6 so as to extend in a front-rear direction along the side surfaces 6a and 6b; the catwalks 16 and 17 are passages utilized when the operator, for example, opens the door DR, to perform maintenance and inspection work on the apparatuses.

The catwalks 16 and 17 are laterally symmetric and basically have the same structure. Thus, the catwalks according to the present invention will be described with reference to the right catwalk 16.

A movable portion 18 is provided at an end portion of the catwalk 16 located behind the operator cab 8 and corresponding to the radially outermost side (arrow H) with respect to a slewing center X of the upper slewing body 6, the movable portion 18 being mounted so as to be pivotable between the horizontal and vertical directions about an axis Y positioned on the side surface 6a side (the upward position is shown by an alternate long and two short dashes line in FIG. 1(c)).

A well-known steel plate with an antiskid member such as a plurality of star- shaped projections formed thereon is attached to a passage surface including the movable portion 18 of the catwalk 16.

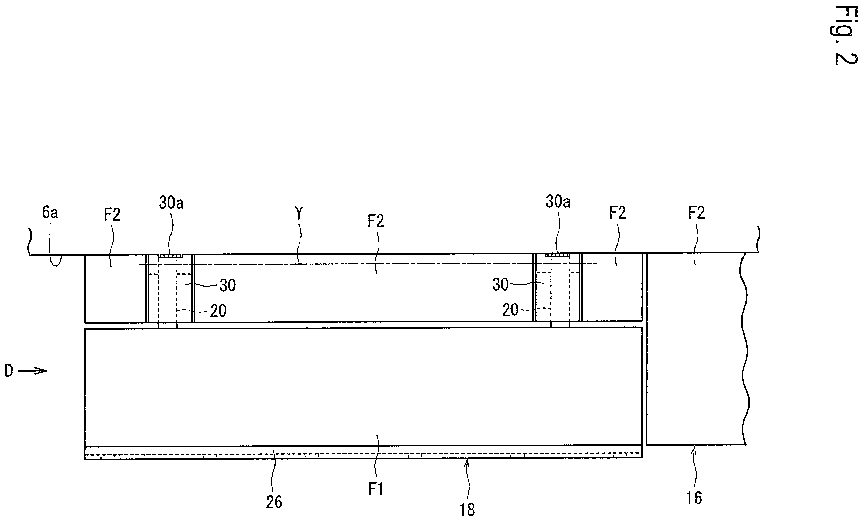

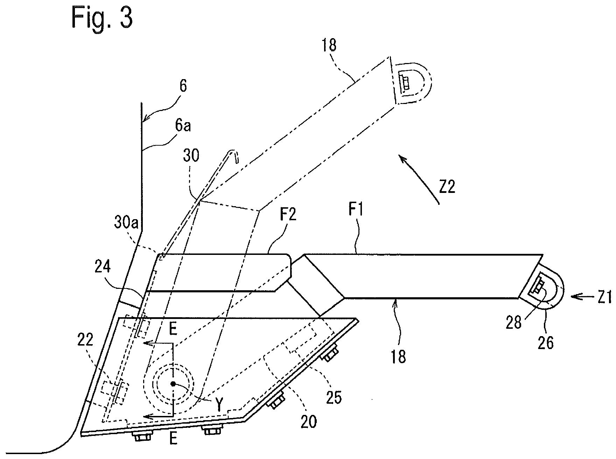

Description will be given with reference to FIG. 2 and FIG. 3 along with FIG. 1. A passage surface F1 of the movable portion 18 is formed outside and away from the axis Y positioned on the side surface 6a side of the upper slewing body 6. On the inside of the side surface 6a, a fixed passage surface F2 is formed as in the case of the remaining part of the catwalk 16.

The movable portion 18 includes two arms 20 spaced from each other in a longitudinal direction (a lateral direction in FIG. 2) of the catwalk 16. One end of the arm 20 is attached, around the axis Y, to a support frame 24 mounted on the side surface 6a of the upper slewing body 6 via a plurality of bolts 22. The tread surface F1 is formed on the other end side of the arm 20.

The axis Y, which is the center of movement of the movable portion 18, is positioned below the passage surface F1. The arm 20 is shaped like a "chevron" and extends outward and upward from the axis Y and horizontally along the passage surface F1. The horizontal position (shown by a solid line in FIG. 3) of the passage surface F1 of the movable portion 18 is defined by the arm 20 in abutting contact with a stopper 25 provided on a support frame 24. This abutting contact state may be held by an elastic rubber latch (not shown in the drawings) that is manually disengageable.

A bumper 26 is attached to an outer end portion away from the side surface 6a of the passage surface F1; the bumper 26 is a buffer member directed obliquely downward and extending fully in a longitudinal direction of the movable portion 18 (the lateral direction in FIG. 2; the direction orthogonal to the sheet of FIG. 3). The bumper 26 is formed of synthetic rubber and has a cross section shaped like a thick cylinder with a U-shaped opening closed by a straight line. The straight line portion closing the U shape is attached to an obliquely downward facing surface of the outer end portion using a plurality of bolts 28 (in the embodiment, six bolts) inserted through holes formed in a circular arc portion of the U shape.

Thus, the movable portion 18 is mounted so as to be pivotable between the horizontal direction (shown by a solid line in FIG. 3) and the vertical direction (shown by an alternate long and two short dashes line) about the axis Y. Only a part of the movable portion 18 located outward of the axis Y is pivoted and flipped up.

A case is explained where the movable portion 18 of the catwalk 16 comes into contact with an obstacle. When the upper slewing body 6 is slewed leftward as shown by arrow L in FIG. 1(b) to bring the bumper 26 of the movable portion 18 into abutting contact with an obstacle S, a reaction force from the obstacle S shown by arrow Z1 in FIG. 3 acts on the bumper 26 of the movable portion 18. Thus, the downward facing bumper 26 located above the axis of pivot Y pushes up the movable portion 18, which is pivoted upward as shown by arrow Z2 about the axis Y. The above-described rubber latch may be installed so as to extend in accordance with the magnitude of the reaction force Z1 from the obstacle. Alternatively, the rubber latch may be adapted to be disengaged or broken in this case.

A hinge plate 30 with a hinge 30a attached to the side surface 6a side of the upper slewing body 6 is provided at a part of the passage surface F2 through which the arm 20 of the movable portion 18 passes when the movable portion 18 pivots between the "horizontal direction" and the "upward position". The hinge plate 30 is moved up and down around the hinge 30a in conjunction with the pivoting movement of the arm 20.

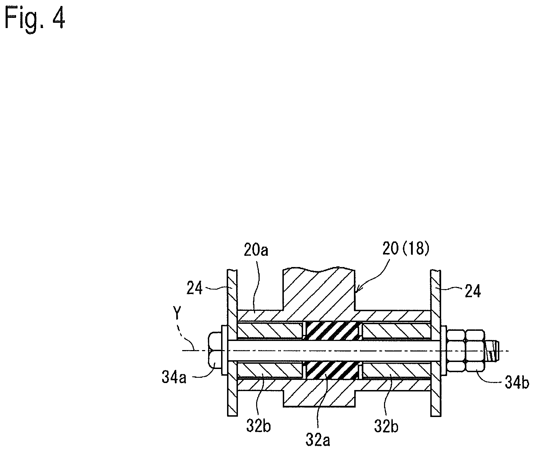

The arm 20 of the movable portion 18 is mounted on the axis Y via an elastic bearing. Description will be given with reference to FIG. 4 along with FIG. 3. A boss 20a corresponding to a part of the support frame 24 of the arm 20 of the movable portion 18 which part is mounted on the axis Y is positioned between two prongs of the support frame 24. The boss 20a includes a cylindrical elastic bearing 32a inserted between a pair of spacers 32b. The arm 20 is attached to the support frame 24 using a bolt 34a passed through the support frame 24 and the elastic bearing 32a and forming the axis Y, and two nuts 34b located at the other end of the bolt 34a.

The effects of the catwalk for the construction machine as described above will be described below.

As clearly shown in FIG. 1, the catwalk 16 that is a passage extending and installed along the side surface 6a of the upper slewing body 6 of the construction machine 2 includes the movable portion 18 at the end portion of the catwalk 16 corresponding to the radially outermost side H with respect to the slewing center X of the upper slewing body 6, the movable portion 18 being mounted so as to be pivotable between the horizontal and vertical directions about the axis Y positioned on the side surface 6a side.

Thus, the movable portion 18 mounted so as to be pivotable between the horizontal and vertical directions is provided at the end portion of the catwalk 16 corresponding to the radially outermost side H with respect to the slewing center X, the end portion being likely to come into contact with the obstacle S during slewing. Thus, when the end portion comes into contact with the obstacle S, the movable portion 18 is flipped up, allowing effective prevention of damage to the catwalk 16. Furthermore, the movable portion 18 is provided only at the end portion, allowing a stable work passage to be prepared. The structure is simple, enabling a reduction in manufacturing costs, and is also easy to handle.

Furthermore, as clearly shown in FIG. 2, the passage surface F1 of the movable portion 18 is formed outside and away from the side surface 6a of the upper slewing body 6, and the fixed passage surface F2 is provided at a position closer to the side surface 6a than said movable passage surface F1.

Therefore, a stable passage surface can be prepared by the passage surface F1 of the movable portion 18, only the outside of which is flipped up, and the inner fixed passage surface F2.

Moreover, as clearly shown in FIG. 3, the axis Y about which the movable portion 18 pivots is positioned below the passage surface F1 of the movable portion 18, and the bumper 26 serving as a buffer member is mounted so as to face obliquely downward at the outer end portion of the passage surface F1 away from the side surface 6a.

Therefore, even when the movable portion 18 comes into contact with the obstacle S, the movable portion 18 is easily flipped up because the passage surface F1 of the movable portion 18 is offset above the axis Y and because the bumper 26 at the outer end portion of the passage surface F1 is mounted to face obliquely downward.

Furthermore, as clearly shown in FIG. 4, the movable portion 18 is mounted on the axis Y via the elastic bearing 32a.

Therefore, the elastic bearing 32a enables a reduction in impulse force applied to the movable portion 18 and also assist in upward pivoting movement of the movable portion 18.

The present invention has been described in detail based on the embodiment. However, the present invention is not limited to the above-described embodiment. For example, many variations and modifications may be made to the embodiment without departing from the scope of the present invention as defined by the appended claims.

In the embodiment, the construction machine is a hydraulic excavator. However, the present invention is applicable to any other construction machine with an upper slewing body, for example, a crane truck.

In the embodiment, the movable portion is provided at the rear end portion of the catwalk behind the operator cab on the upper slewing body. However, if, for example, a front end portion corresponds to the outermost side of the slewing radius, the movable portion may be provided at the front end portion, which corresponds to the outermost side.

## Claims

1. A construction machine (2) with an upper slewing body (6) and having a catwalk (16, 17), the catwalk (16, 17) being a passage extending and installed along a side surface (6a) of the upper slewing body (6), the catwalk (16, 17) comprising:
a movable portion (18) provided at an end portion of the catwalk (16, 17) corresponding to a radially outermost side (H) with respect to a slewing center (X) of the upper slewing body (6), the movable portion (18) being mounted so as to be pivotable between horizontal and vertical directions about an axis (Y) positioned on a side surface side of the upper slewing body (6) below a passage surface (F1) of the movable portion (18);
wherein the passage surface (F1) of the movable portion (18) is formed outside and away from the side surface (6a) of the upper slewing body (6),
**characterized in that**
a fixed passage surface (F2) is provided at a position closer to the side surface (6a) than said passage surface (F1) of the movable portion (18), and
a bumper (26) serving as a buffer member is mounted so as to face obliquely downward at an outer end portion of the passage surface (F1) away from the side surface (6a) of the upper slewing body (6).

2. The catwalk according to claim 1, wherein the movable portion (18) is mounted on the axis (y) via an elastic bearing (32a) .

## Patentansprüche

1. Baumaschine (2) mit einem oberen Schwenkkörper (6) und mit einer Arbeitsbühne (16, 17), wobei die Arbeitsbühne (16, 17) ein Durchgang ist, der sich entlang einer seitlichen Oberfläche (6a) des oberen Schwenkkörpers (6) erstreckt und daran entlang installiert ist, wobei die Arbeitsbühne (16, 17) umfasst:
einen beweglichen Abschnitt (18), der an einem Endabschnitt der Arbeitsbühne (16, 17) bereitgestellt ist, der einer radial äußersten liegenden Seite (H) in Bezug auf ein Schwenkzentrum (X) des oberen Schwenkkörpers (6) entspricht, wobei der bewegliche Abschnitt (18) so montiert ist, dass er schwenkbar zwischen horizontalen und vertikalen Richtungen um eine Achse (Y) auf einer seitlichen Oberflächenseite des oberen Schwenkkörpers (6) unter einer Durchgangsoberfläche (F1) des beweglichen Abschnitts (18) positioniert ist;
wobei die Durchgangsoberfläche (F1) des beweglichen Abschnitts (18) außerhalb und weg von der seitlichen Oberfläche (6a) des oberen Schwenkkörpers (6) ausgebildet ist,
**dadurch gekennzeichnet, dass**
eine feste Durchgangsoberfläche (F2) an einer Position bereitgestellt ist, die näher an der seitlichen Oberfläche (6a) liegt als die Durchgangsoberfläche (F1) des beweglichen Abschnitts (18), und
ein als Pufferglied dienender Stoßfänger (26) so montiert ist, dass er schräg nach unten an einem äußeren Endabschnitt der Durchgangsoberfläche (F1) weg von der seitlichen Oberfläche (6a) des oberen Schwenkkörpers (6) weist.

2. Arbeitsbühne nach Anspruch 1, wobei der bewegliche Abschnitt (18) über ein elastisches Lager (32a) auf der Achse (y) montiert ist.

## Revendications

1. Machine de construction (2) avec un corps supérieur tournant (6) et ayant une passerelle (16, 17), la passerelle (16, 17) étant un passage s'étendant et installé le long d'une surface latérale (6a) du corps supérieur tournant (6), la passerelle (16, 17) comprenant :
une partie mobile (18) prévue au niveau d'une partie d'extrémité de la passerelle (16, 17) correspondant à un côté radialement le plus à l'extérieur (H) par rapport à un centre d'orientation (X) du corps supérieur tournant (6), la partie mobile (18) étant montée de sorte à être pivotante entre des directions horizontale et verticale autour d'un axe (Y) positionné sur un côté de surface latérale du corps supérieur tournant (6) au-dessous d'une surface de passage (F1) de la partie mobile (18) ;
dans laquelle la surface de passage (F1) de la partie mobile (18) est formée à l'extérieur et à l'écart de la surface latérale (6a) du corps supérieur tournant (6),
**caractérisé en ce que**
une surface de passage fixe (F2) est prévue à une position plus proche de la surface latérale (6a) que ladite surface de passage (F1) de la partie mobile (18), et
un pare-chocs (26) servant de membre tampon est monté de sorte à faire face obliquement vers le bas au niveau d'une partie d'extrémité extérieure de la surface de passage (F1) éloignée de la surface latérale (6a) du corps supérieur tournant (6).

2. Passerelle selon la revendication 1, dans laquelle la partie mobile (18) est montée sur l'axe (y) par l'intermédiaire d'un palier élastique (32a).
